# EUROPEAN PATENT SPECIFICATION

(11) **EP 2 981 044 B1**
(45) Date of publication and mention of the grant of the patent: **07.03.2018**
(21) Application number: 15177970.9
(22) Date of filing: 23.07.2015
(51) Int. Cl.: H04L 12/26, H04L 29/08

(54) **AN APPARATUS, SYSTEM AND METHOD OF DATA COLLECTION WHEN AN END-USER DEVICE IS NOT CONNECTED TO THE INTERNET**
VORRICHTUNG, SYSTEM UND VERFAHREN ZUR DATENSAMMLUNG, WENN EINE ENDBENUTZERVORRICHTUNG NICHT MIT DEM INTERNET VERBUNDENEN IST
APPAREIL, SYSTÈME ET PROCÉDÉ DE COLLECTE DE DONNÉES LORSQU'UN DISPOSITIF D'UTILISATEUR FINAL N'EST PAS CONNECTÉ À INTERNET

(30) Priority: 01.08.2014 US 201462032422 P; 21.07.2015 US 201514805380
(43) Date of publication of application: 03.02.2016
(73) Proprietor: Synchronoss Technologies, Inc., Bridgewater, NJ 08807 (US)
(72) Inventor: Khandewale, Rajesh Shriram, Sunnyvale, CA 94089 (US)
(74) Representative: Branderhorst, Matthijs Pieter Arie

(56) References cited:
- US-A1- 2009 248 835
- US-A1- 2012 166 592
- US-A1- 2013 155 947
- US-A1- 2014 075 307
- US-B1- 7 656 849

## Description

### Field of Invention

The present invention relates to data collection. More particularly, the present invention relates to an apparatus, system and method of data collection when an end-user device is not connected to a network such as the Internet.

### Background of the Invention

Many device applications support the ability to generate data. In many cases, an end user is in a situation in which the device does not have Internet access to deliver the generated data to a centralized repository. When that occurs, there is an inherent assumption that the generated data is stored locally and is transmitted at such time when the device does establish Internet connectivity. There is a further assumption that the application, that is implementing the generation and transmission of the data, continues to be installed until such time as the Internet connection is restored. However, in the real world, there are numerous applications that are "one time use" by end users and after utilizing the functionality of those applications, the end users remove the applications from their devices prior to having an opportunity to transmit the generated data. Alternatively, these applications are never invoked again. This results in lost information which can never be regained or even identified as being lost. To prevent loss of the generated data, prior art solutions prevent the end users from uninstalling the applications or exiting the applications until there is Internet connectivity such that the generated data can be transmitted to the centralized repository. However, the prior art solutions are not user friendly and limit usability of the devices. Patent application US 20090248835A1 describes the upload of data from a local network towards a device on the Internet via a gateway.

### Brief Summary of the Invention

Embodiments of the present invention are directed to delivering application data associated with end-user devices to a remote location via an agent running on a networked device, such as an access point. The end-user devices include a first device and a second device that communicate with each other via the access point. Exemplary first and second devices are a source device and a target device, respectively, wherein these devices communicate with each other during a content transfer session. In some embodiments, the source device transfers content to the target device using a Wi-Fi network that is not operatively connected to the Internet. Each end-user device generates application data throughout the session. The agent independently receives the application data from the end-user devices and, thereafter, uploads the application data to the remote location using mobile data or Wi-Fi by switching to a different network that is operatively connected to the Internet. The invention concerns a method according to claim 1 and a system according to claim 9, with further details in the dependent claims 2-8 and 10-12.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
Figure 1 illustrates an exemplary system in accordance with some embodiments.
Figure 2 illustrates a block diagram of an exemplary computing device according to some embodiments.
Figure 3 illustrates an exemplary method in accordance with some embodiments.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Embodiments of the present invention are directed to delivering application data associated with end-user devices to a remote location via an agent running on a networked device, such as an access point. The end-user devices include a first device and a second device that communicate with each other via the access point. Exemplary first and second devices are a source device and a target device, respectively, wherein these devices communicate with each other during a content transfer session. In some embodiments, the source device transfers content to the target device using a Wi-Fi network that is not operatively connected to the Internet. Each end-user device generates application data throughout the session. The agent independently receives the application data from the end-user devices and, thereafter, uploads the application data to the remote location using mobile data or Wi-Fi by switching to a different network that is operatively connected to the Internet.

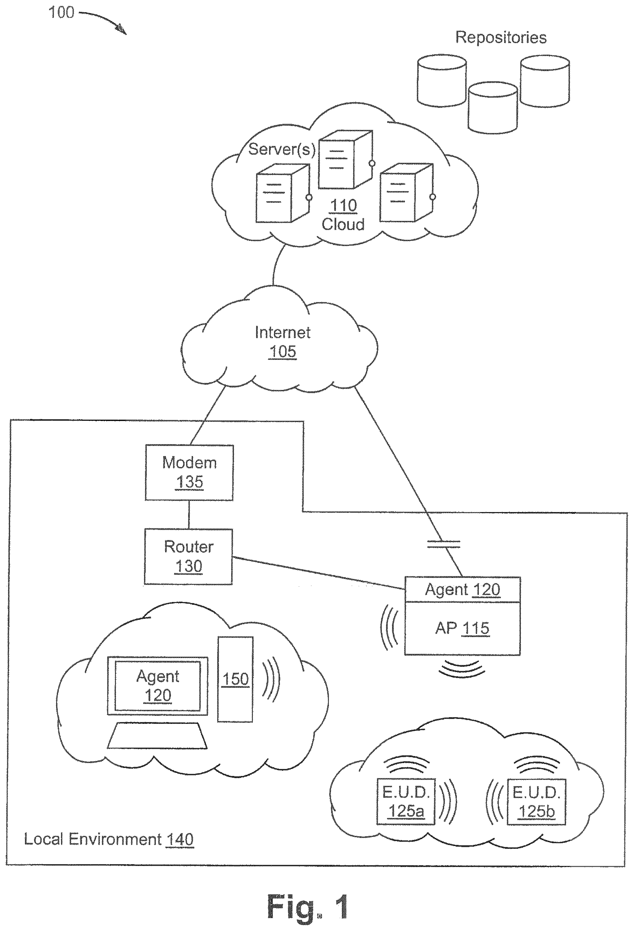

Figure 1 illustrates an exemplary system 100 in accordance with some embodiments. The system 100 includes the Internet 105 and one or more remote servers in a cloud 110 communicatively coupled with the Internet 105. The Internet 106 includes wired and/or cellular networks. The system 100 also includes a local environment 140, such as a retail environment, which allows end-user devices 125 in the local environment 140 to directly transfer content across different device platforms using a local Wi-Fi network that is not connected to the Internet 105. The end-user devices 125 include, at least, a source device 125a (also herein referred to as first device or old device) and a target device 125b (also herein referred to as second device or new device). In some embodiments, each end-user device 125 includes a content transfer application installed thereon that is configured to allow the end-user devices 125 to initiate and/or participate in a content transfer session in the local environment 140. The content transfer application is configured to not only transfer content from one end-user device 125a to another end-user device 125b, but is also configured to generate application data (metadata) that is of interest by, used by, and/or specified by an administrator of the local environment 140 (such as a store representative) and/or an application vendor. In some embodiments, each of the end-user devices 125 starts to generate its own application data upon the content transfer application launching (executing) on the end-user device 125. The application data generated on one end-user device is different from the application data generated on another end-user device. The application data is different from the content being transferred from the source device 125a to the target device 125b. In particular, content being transferred between end-user devices 125 can include pictures, contacts, messages, and the like, whereas the application data can include usage, metrics, statistics and analytics data and/or other metadata that is generated by the application. In some embodiments, the application data is not viewable on and/or accessible by users of the end-user devices 125. It should be understood that the term "application data" used herein may refer to that generated on one end-user device or may refer to that generated across multiple end-user devices.

The local environment 140 includes an access point 115. The access point 115 is accessible by the administrator of the local environment 140 and is configured to include a plurality of service set identifiers (SSIDs). Each SSID is associated with and identifies a Wi-Fi network in the local environment 140. Each local Wi-Fi network can have different network properties and configurations. The plurality of SSIDs includes a first SSID that allows the end-user devices 125 to communicate with each other in a first local Wi-Fi network without access to the Internet 105 as a service requirement to simplify deployment and logistics to offer the content transfer service. The plurality of SSIDs also includes a second SSID that allows other coupled devices, such as a computing device 150, in a second local Wi-Fi network to access to the Internet 105 via the wired network (e.g., using a router 130 and a modem 135) or via the cellular network. Although the router 130 and the access point 115 are shown in Figure 1 as two distinct standalone physical devices, the functionalities of both can be combined and implemented in one physical device.

The local environment 140 also includes an agent 120. The agent 120 can reside in the access point 115, in the router 130 or in the computing device 150 that is deployed in the local environment 140 and is communicatively coupled with the access point 115. Regardless where the agent 120 is located, the agent 120 can be discovered by all end-user devices 125 that are communicatively coupled with the access point 115. These end-user devices 125 are independently coupled with the agent 120 upon discovery. The agent 120 is configured to collect application data from all end-user devices 125 that are participating in content transfers. In some embodiments, the application data generated on each end-user device 125 is sent to and received by the agent 120 during and/or after the content transfer session. The end-user devices 125 can send application data relating to partial, complete, successful and failed transfers to the agent 120. In some embodiments, the application data from each end-user device 125 is periodically sent to the agent 120. The agent 120 thereafter uploads all application data, either in piecemeal after each reception or a predetermined number of receptions from the end-user devices 125, to the one or more remote servers in the cloud 110 for data collection and analytics. In some embodiments, the one or more remote servers are data collection and/or reporting servers. In some embodiments, the one or more remote servers are dedicated servers for a specific application, such as the content transfer application. Alternatively, the one or more remote servers are global servers for a plurality of unrelated applications. Each of the one or more servers is configured to appropriately store the application data in one or more repositories.

In some embodiments, the agent 120 has a built-in retry mechanism and has access to local storage to ensure that the application data is never lost and is reliably uploaded to the one or more servers in the cloud 110. In some embodiments, the agent 120 uses either mobile data in connection with the cellular network, Wi-Fi or another communication protocol by switching to a network that is connected to the Internet 105.

In some embodiments, the agent 120 includes a user interface that allows the administrator of the local environment 140 to access and view details about the agent 120. Exemplary details include data uploaded, data pending and connection statistics. Other details, such as number of active transfers, are contemplated. In some embodiments, the administrator of the local environment 140 and/or the application vendor are able to access the one or more servers in the cloud 110.

Although the local environment 140 in Figure 1 is shown to include a single access point, a single router, and a single modem, a plurality of any of each of these networking devices can be deployed in the local environment 140 and is configured according to networking requirements of the local environment 140.

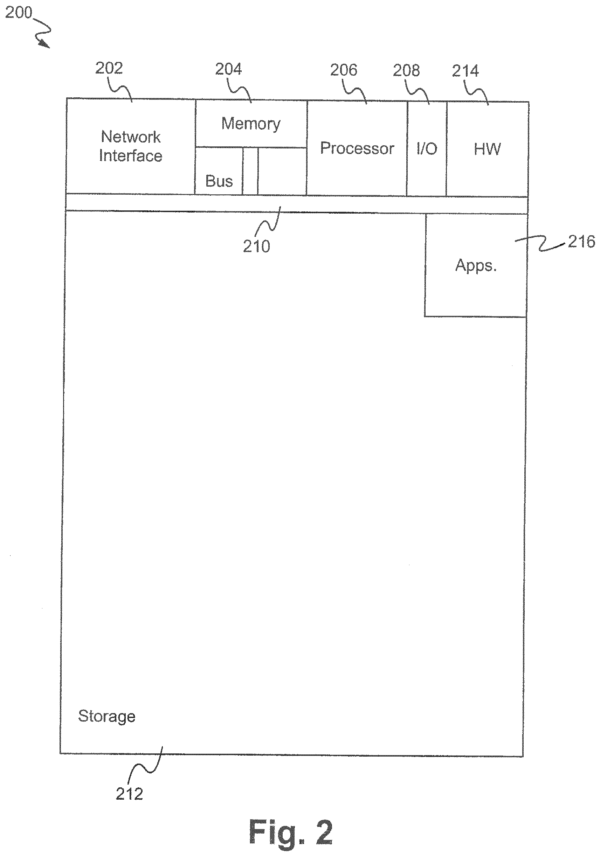

Figure 2 illustrates a block diagram 200 of an exemplary computing device according to some embodiments. The computing device 200 is able to be used to acquire, cache, store, compute, search, transfer, communicate and/or display information.

In general, a hardware structure suitable for implementing the computing device 200 includes a network interface 202, a memory 204, processor(s) 206, I/O device(s) 208, a bus 210 and a storage device 212. The choice of processor 206 is not critical as long as a suitable processor with sufficient speed is chosen. In some embodiments, the computing device 200 includes a plurality of processors 206. The memory 204 is able to be any conventional computer memory known in the art. The storage device 212 is able to include a hard drive, CDROM, CDRW, DVD, DVDRW, flash memory card (e.g., SD Card), RAM, ROM, EPROM, EEPROM and/or any other storage device. The computing device 200 is able to include one or more network interfaces 202. An example of a network interface includes a network card communicatively coupled to a network, such an Ethernet or other type of LAN. The I/O device(s) 208 are able to include one or more of the following: keyboard, mouse, monitor, display, printer, modem, touchscreen, button interface and other devices. Application(s) 214, such as a transfer application or an application implementing an agent etc., are likely to be stored in the storage device 212 and memory 204 and are processed by the processor 206. More or less components or modules shown in Figure 2 are able to be included in the computing device 200. For example, the computing device 200 can include a SIM (subscriber identity module) card connected to a cellular network. For another example, the computing device 200 can include a camera module for taking digital pictures and videos.

The computing device 200 can be a server or an end-user device. Exemplary end-user devices include, but are not limited to, a tablet, a mobile phone, a smart phone, a desktop computer, a laptop computer, a netbook, or any suitable computing device such as special purpose devices, including set top boxes and automobile consoles.

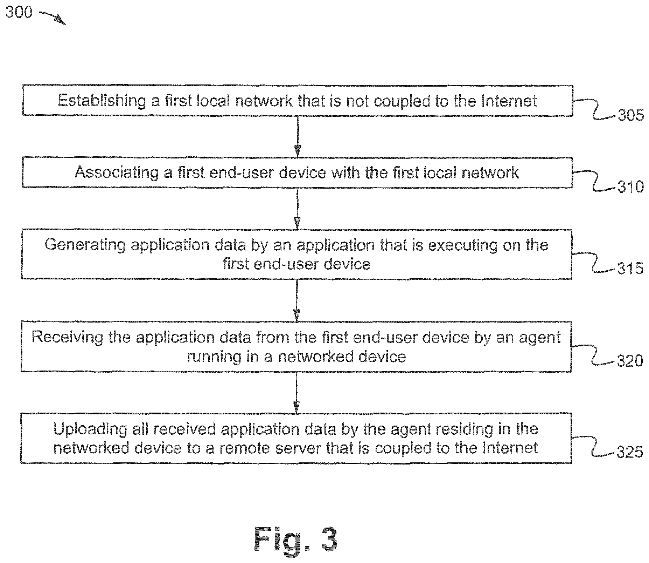

Figure 3 illustrates an exemplary method 300 in accordance with some embodiments. At a step 305, a first local network that is not connected to the Internet is established in a contained environment, such as a retail environment. The first local network is configured to allow end-user devices to communicate with each other.

At a step 310, a first end-user device is associated with the first local network. In some embodiments, the first end-user device is a source device.

At a step 315, application data is generated by an application that is executing on the first end-user device. In some embodiments, the application that is executing on the first end-user device is a content transfer application.

At a step 320, the application data from the first end-user device is received by an agent residing in a networked device. The networked device is located in the contained environment. In some embodiments, the networked device is an access point. Alternatively, the networked device is a computing device that is not a part of the first local network. Alternatively, the networked device is a router.

In some embodiments, the method also includes associating a second end-user device with the first local network. Application data is generated by an application that is executing on the second end-user device. In some embodiments, the application that is executing on the second end-user device is a content transfer application. The application data from the second end-user device is also received by the agent residing in the networked device. In some embodiments, the first end-user device and the second end-user device are independently coupled with the agent residing in the networked device.

In some embodiments, the method also includes establishing a content transfer session in the first local network. The content transfer session is between and communicatively couples the first end-user device and the second end-user device. The content transfer session allows for the transfer of content from the first end-user device to the second end-user device. In some embodiments, the application data is continuously generated on each of the first and second end-user device during the execution of the respective application on each of end-user devices.

At a step 325, all received application data from the end-user devices is uploaded by the agent residing in the networked device to a remote server that is connected to the Internet. The remote server is located outside the contained environment. In some embodiments, the received application data is uploaded by the agent to the remote server via a cellular network. Alternatively, the received application data is uploaded by the agent from a second local network that is different from the first local network. The second local network is coupled to the Internet. In some embodiments, the second local network is also in the contained environment. In some embodiments, the first local network and the second local network are maintained by the same entity. In some embodiments, the networked device is a part of the second local network.

In some embodiments, the method also includes providing a plurality of user interfaces to an administrator of the contained environment. For example, a first user interface is configured to access the agent, and a second user interface is configured to present statistics and analytics data associated with the agent. The statistics and analytics data can include data uploaded, data pending, connection statistics and a number of active transfers.

In the system 100 of Figure 1, the application data generated on each end-user device 125 is advantageously captured and eventually sent to the cloud 110 via the agent 120, even if the end-user devices 125 are not connected with the Internet. In situations where a source device 125a is attempting to establish a content transfer session with a target device 125b but fails to do so, the application data generated on the source device 125a is captured and eventually sent to the cloud 110 since both end-user devices 125 are responsible for generating and sending application data to the agent 120. Similarly, when a connection between a source device 125a and a target device 125b fails after the connection is established, the agent 120 receives the application data generated on each of the devices 125a, 125b. The end-user devices 125 may not be, or ever be, operatively connected to the Internet 105 during and/or after a content transfer session (generation of application data). As discussed elsewhere, application data refers to metadata generated by a content transfer application. Unlike the present solution, prior art solutions rely only on the target device 125b to transmit application data generated on both end-user devices 125 to the cloud 110. With the prior art solutions, the target device 125b will never receive application data generated on the source device 125a to transmit to the cloud 110 in situations of a failed connection between the target device 125b and the source device 125a because the target device 125b would have never received the application data from the source device 125a due to the failed connection.

One of ordinary skill in the art will realize other uses and advantages also exist. While the invention has been described with reference to numerous specific details, one of ordinary skill in the art will recognize that the invention can be embodied in other specific forms. Thus, one of ordinary skill in the art will understand that the invention is not to be limited by the foregoing illustrative details, but rather is to be defined by the appended claims.

## Claims

1. A method of delivering data associated with end-user devices to a remote location, the method comprising:
establishing a first local network (140), which is not operatively connected to the Internet(105); associating a first end-user device (125a) with the first local network;
generating first data by a first content transfer application that is executing on the first end-user device;
receiving the first data from the first end-user device by an agent residing in a networked device; and
uploading all received first data by the agent (120) residing in the networked device to a remote server that is operatively coupled to the Internet,
associating a second end-user device (125b) with the first local network (140); generating second data by a second content transfer application that is executing on the second end-user device; and
receiving the second data from the second end-user device (125b) by the agent residing in the networked device, wherein the first end-user device and the second end-user device are independently coupled with the agent residing in the networked device,
establishing a content transfer session in the first local network (140), wherein said first data and said second data are generated during the content transfer session, and wherein said first data and said second data are different from the content being transferred, wherein the content transfer session is between the first end-user device and the second end-user device and enabled by the first content transfer application and the second content transfer application; and
transferring content from the first end-user device to the second end-user device.

2. The method of Claim 1, wherein the received first and second data is uploaded by the agent to the remote server from a second local network that is coupled to the Internet.

3. The method of Claim 2, wherein the first local network and the second local network are in one contained environment and maintained by the same entity.

4. The method of Claim 3, wherein the networked device is an access point.

5. The method of Claim 3, wherein the networked device is a computing device that is a part of the second local network.

6. The method of Claim 3, wherein the remote server is located outside the contained environment.

7. The method of Claim 1, wherein the received first and second data is uploaded by the agent to the remote server via a cellular network.

8. The method of Claim 1, further comprising:
providing a first user interface configured to allow an administrator of the local network to access the agent; and
providing a second user interface configured to present statistics and analytics data associated with the agent, wherein the statistics and analytics data include data uploaded, data pending, connection statistics and a number of active transfers.

9. A system for delivering application data associated with end-user devices to a remote location, the system comprising:
a first local network (140) which is not operatively connected to the Internet; a first end-user device (125a) associated with the first local network;
first data that is generated by a first application that is executing on the first end-user device; and
a networked device including an agent (120) that is configured to receive the first data from the first end-user device (125a) and to upload all received first data to a remote server that is operatively coupled to the Internet; a second end-user device (125b) associated with the first local network; and
second data that is generated by a second application that is executing on the second-end user device, wherein the agent (120) is configured to receive the second data from the second end-user device, wherein the first end-user device and the second end-user device are independently coupled with the agent residing in the networked device;
wherein said first data and said second data are generated during a content transfer session and wherein said first data and said second data are different from the content being transferred, wherein the content transfer session is enabled by the first application and the second application, and wherein content is transferred from the first end-user device to the second end user device by said content transfer session.

10. The system of Claim 9, further comprising a second local network that is coupled to the Internet, wherein the agent uploads the received first and second data to the remote server from the second local network, wherein the first local network and the second local network are in one contained environment and maintained by the same entity.

11. The system of Claim 9, wherein the agent (120) uploads the received first and second data to the remote server via a cellular network.

12. The system of Claim 9, further comprising:
a first user interface configured to allow an administrator of the local network to access the agent; and
a second user interface configured to present statistics and analytics data associated with the agent, wherein the statistics and analytics data include data uploaded, data pending, connection statistics and a number of active transfers.

## Patentansprüche

1. Verfahren zum Zustellen von Daten, die Endbenutzervorrichtungen zugeordnet sind, an einen entfernten Standort, wobei das Verfahren umfasst:
Einrichten eines ersten lokalen Netzwerks (140), das mit dem Internet (105) nicht betrieblich verbunden ist;
Zuordnen einer ersten Endbenutzervorrichtung (125a) zum ersten lokalen Netzwerk;
Erzeugen erster Daten durch eine erste Inhaltsübermittlungsanwendung, die auf der ersten Endbenutzervorrichtung ausgeführt wird;
Empfangen der ersten Daten von der ersten Endbenutzervorrichtung durch einen Agenten, der in einer vernetzten Vorrichtung residiert; und
Hochladen aller empfangenen ersten Daten durch den in der vernetzten Vorrichtung residierenden Agenten (120) zu einem entfernten Server, der mit dem Internet betrieblich verbunden ist,
Zuordnen einer zweiten Endbenutzervorrichtung (125b) zum ersten lokalen Netzwerk (140);
Erzeugen zweiter Daten durch eine zweite Inhaltsübermittlungsanwendung, die auf der zweiten Endbenutzervorrichtung ausgeführt wird; und
Empfangen der zweiten Daten von der zweiten Endbenutzervorrichtung (125b) durch den in der vernetzten Vorrichtung residierenden Agenten,
worin die erste Endbenutzervorrichtung und die zweite Endbenutzervorrichtung unabhängig mit dem in der vernetzten Vorrichtung residierenden Agenten gekoppelt sind,
Einrichten einer Inhaltsübermittlungssitzung im ersten lokalen Netzwerk (140), worin die ersten Daten und die zweiten Daten während der Inhaltsübermittlungssitzung erzeugt werden, und worin die ersten Daten und die zweiten Daten sich von dem Inhalt, der übermittelt wird, unterscheiden, worin die Inhaltsübermittlungssitzung zwischen der ersten Endbenutzervorrichtung und der zweiten Endbenutzervorrichtung stattfindet und durch die erste Inhaltsübermittlungsanwendung und die zweite Inhaltsübermittlungsanwendung ermöglicht wird; und
Übermitteln von Inhalt von der ersten Endbenutzervorrichtung zur zweiten Endbenutzervorrichtung.

2. Verfahren nach Anspruch 1, worin die empfangenen ersten und zweiten Daten durch den Agenten von einem zweiten lokalen Netzwerk, das mit dem Internet gekoppelt ist, zum entfernten Server hochgeladen werden.

3. Verfahren nach Anspruch 2, worin das erste lokale Netzwerk und das zweite lokale Netzwerk sich in einer abgeschlossenen Umgebung befinden und durch die gleiche Instanz verwaltet werden.

4. Verfahren nach Anspruch 3, worin die vernetzte Vorrichtung ein Zugangspunkt ist.

5. Verfahren nach Anspruch 3, worin die vernetzte Vorrichtung eine Computervorrichtung ist, die Teil des zweiten lokalen Netzwerks ist.

6. Verfahren nach Anspruch 3, worin der entfernte Server außerhalb der abgeschlossenen Umgebung angeordnet ist.

7. Verfahren nach Anspruch 1, worin die empfangenen ersten und zweiten Daten durch den Agenten über ein Mobilfunknetz zum entfernten Server hochgeladen werden.

8. Verfahren nach Anspruch 1, ferner umfassend:
Bereitstellen einer ersten Benutzerschnittstelle, die dafür konfiguriert ist, einem Administrator des lokalen Netzwerks zu gestatten, auf den Agenten zuzugreifen; und
Bereitstellen einer zweiten Benutzerschnittstelle, die dafür konfiguriert ist, Statistiken und Analysedaten zu präsentieren, die dem Agenten zugeordnet sind, worin die Statistiken und Analysedaten hochgeladene Daten, ausstehende Daten, Verbindungsstatistiken und eine Anzahl aktiver Übermittlungen einschließen.

9. System zum Zustellen von Anwendungsdaten, die Endbenutzervorrichtungen zugeordnet sind, an einen entfernten Standort, wobei das System umfasst:
ein erstes lokales Netzwerk (140), das mit dem Internet nicht betrieblich verbunden ist;
eine erste Endbenutzervorrichtung (125a), die dem ersten lokalen Netzwerk zugeordnet ist;
erste Daten, die durch eine erste Anwendung erzeugt werden, die auf der ersten Endbenutzervorrichtung ausgeführt wird; und
eine vernetzte Vorrichtung, die einen Agenten (120) einschließt, der dafür konfiguriert ist, die ersten Daten von der ersten Endbenutzervorrichtung (125a) zu empfangen und alle empfangenen ersten Daten zu einem entfernten Server hochzuladen, der mit dem Internet betrieblich verbunden ist,
eine zweite Endbenutzervorrichtung (125b), die dem ersten lokalen Netzwerk zugeordnet ist; und
zweite Daten, die durch eine zweite Anwendung erzeugt werden, die auf der zweiten Endbenutzervorrichtung ausgeführt wird, worin der Agent (120) dafür konfiguriert ist, die zweiten Daten von der zweiten Endbenutzervorrichtung zu empfangen, worin die erste Endbenutzervorrichtung und die zweite Endbenutzervorrichtung unabhängig mit dem in der vernetzten Vorrichtung residierenden Agenten gekoppelt sind;
worin die ersten Daten und die zweiten Daten während einer Inhaltsübermittlungssitzung erzeugt werden und worin die ersten Daten und die zweiten Daten sich von dem Inhalt, der übermittelt wird, unterscheiden,
worin die Inhaltsübermittlungssitzung durch die erste Anwendung und die zweite Anwendung ermöglicht wird und worin Inhalt durch die Inhaltsübermittlungssitzung von der ersten Endbenutzervorrichtung zur zweiten Endbenutzervorrichtung übermittelt wird.

10. System nach Anspruch 9, ferner ein zweites lokales Netzwerk umfassend, das mit dem Internet gekoppelt ist, worin der Agent die empfangenen ersten und zweiten Daten vom zweiten lokalen Netzwerk zum entfernten Server hochlädt, worin das erste lokale Netzwerk und das zweite lokale Netzwerk sich in einer abgeschlossenen Umgebung befinden und durch die gleiche Instanz verwaltet werden.

11. System nach Anspruch 9, worin der Agent (120) die empfangenen ersten und zweiten Daten über ein Mobilfunknetz zum entfernten Server hochlädt.

12. System nach Anspruch 9, ferner umfassend:
eine erste Benutzerschnittstelle, die dafür konfiguriert ist, einem Administrator des lokalen Netzwerks zu gestatten, auf den Agenten zuzugreifen; und
eine zweite Benutzerschnittstelle, die dafür konfiguriert ist, Statistiken und Analysedaten zu präsentieren, die dem Agenten zugeordnet sind, worin die Statistiken und Analysedaten hochgeladene Daten, ausstehende Daten, Verbindungsstatistiken und eine Anzahl aktiver Übermittlungen einschließen.

## Revendications

1. Procédé pour délivrer des données associées à des dispositifs d'utilisateur final vers un emplacement distant, le procédé comprenant les étapes ci-dessous consistant à :
établir un premier réseau local (140) qui n'est pas opérationnellement connecté à Internet (105) ;
associer un premier dispositif d'utilisateur final (125a) au premier réseau local ;
générer des premières données, par le biais d'une première application de transfert de contenu qui s'exécute sur le premier dispositif d'utilisateur final ;
recevoir les premières données en provenance du premier dispositif d'utilisateur final, par le biais d'un agent résidant dans un dispositif mis en réseau ; et
télécharger toutes les premières données reçues, par le biais de l'agent (120) résidant dans le dispositif mis en réseau, vers un serveur distant qui est opérationnellement couplé à Internet,
associer un second dispositif d'utilisateur final (125b) au premier réseau local (140) ;
générer des secondes données, par le biais d'une seconde application de transfert de contenu qui s'exécute sur le second dispositif d'utilisateur final ; et
recevoir les secondes données en provenance du second dispositif d'utilisateur final (125b), par le biais de l'agent résidant dans le dispositif mis en réseau ;
dans lequel le premier dispositif d'utilisateur final et le second dispositif d'utilisateur final sont indépendamment couplés avec l'agent résidant dans le dispositif mis en réseau ;
établir une session de transfert de contenu dans le premier réseau local (140), dans lequel lesdites premières données et lesdites secondes données sont générées au cours de la session de transfert de contenu, et dans lequel lesdites premières données et lesdites secondes données sont différentes du contenu qui est transféré, dans lequel la session de transfert de contenu est entre le premier dispositif d'utilisateur final et le second dispositif d'utilisateur final et est activée par la première application de transfert de contenu et la seconde application de transfert de contenu ; et
transférer le contenu du premier dispositif d'utilisateur final au second dispositif d'utilisateur final.

2. Procédé selon la revendication 1, dans lequel les premières et secondes données reçues sont téléchargées par l'agent sur le serveur distant à partir d'un second réseau local qui est couplé à Internet.

3. Procédé selon la revendication 2, dans lequel le premier réseau local et le second réseau local sont situés dans un environnement confiné et sont maintenus par la même entité.

4. Procédé selon la revendication 3, dans lequel le dispositif mis en réseau est un point d'accès.

5. Procédé selon la revendication 3, dans lequel le dispositif mis en réseau est un dispositif informatique qui fait partie du second réseau local.

6. Procédé selon la revendication 3, dans lequel le serveur distant est situé en dehors de l'environnement confiné.

7. Procédé selon la revendication 1, dans lequel les premières et secondes données reçues sont téléchargées par l'agent sur le serveur distant par l'intermédiaire d'un réseau cellulaire.

8. Procédé selon la revendication 1, comprenant en outre les étapes ci-dessous consistant à :
fournir une première interface utilisateur configurée de manière à permettre à un administrateur du réseau local d'accéder à l'agent ; et
fournir une seconde interface utilisateur configurée de manière à présenter des données statistiques et analytiques associées à l'agent, dans lequel les données statistiques et analytiques incluent des données téléchargées, des données en attente, des statistiques de connexion et un nombre de transferts actifs.

9. Système destiné à délivrer des données d'application associées à des dispositifs d'utilisateur final à un emplacement distant, le système comprenant :
un premier réseau local (140) qui n'est pas opérationnellement connecté à Internet ;
un premier dispositif d'utilisateur final (125a) associé au premier réseau local ;
des premières données qui sont générées par une première application qui s'exécute sur le premier dispositif d'utilisateur final ; et
un dispositif mis en réseau incluant un agent (120) qui est configuré de manière à recevoir les premières données en provenance du premier dispositif d'utilisateur final (125a), et à télécharger toutes les premières données reçues vers un serveur distant qui est opérationnellement couplé à Internet ;
un second dispositif d'utilisateur final (125b) associé au premier réseau local ;
des secondes données qui sont générées par une seconde application qui s'exécute sur le second dispositif d'utilisateur final, dans lequel l'agent (120) est configuré de manière à recevoir les secondes données en provenance du second dispositif d'utilisateur final, dans lequel le premier dispositif d'utilisateur final et le second dispositif d'utilisateur final sont indépendamment couplés avec l'agent résidant dans le dispositif mis en réseau ;
dans lequel lesdites premières données et lesdites secondes données sont générées au cours d'une session de transfert de contenu, et dans lequel lesdites premières données et lesdites secondes données sont différentes du contenu qui est transféré ;
dans lequel la session de transfert de contenu est activée par la première application et la seconde application, et dans lequel le contenu est transféré du premier dispositif d'utilisateur final au second dispositif d'utilisateur final par ladite session de transfert de contenu.

10. Système selon la revendication 9, comprenant en outre un second réseau local qui est couplé à Internet, dans lequel l'agent télécharge les premières et secondes données reçues sur le serveur distant à partir du second réseau local, dans lequel le premier réseau local et le second réseau local sont situés dans un environnement confiné et sont maintenus par la même entité.

11. Système selon la revendication 9, dans lequel l'agent (120) télécharge les premières et secondes données reçues sur le serveur distant par l'intermédiaire d'un réseau cellulaire.

12. Système selon la revendication 9, comprenant en outre :
une première interface utilisateur configurée de manière à permettre à un administrateur du réseau local d'accéder à l'agent ; et
une seconde interface utilisateur configurée de manière à présenter des données statistiques et analytiques associées à l'agent, dans lequel les données statistiques et analytiques incluent des données téléchargées, des données en attente, des statistiques de connexion et un nombre de transferts actifs.
